# EUROPÄISCHE PATENTANMELDUNG

(11) **EP 1 395 073 A2**
(43) Veröffentlichungstag der Anmeldung: **03.03.2004**
(21) Anmeldenummer: 03090233.2
(22) Anmeldetag: 25.07.2003
(51) Int. Cl.: H04Q 7/32, H04M 3/42, H04M 1/725

(54) **Verfahren zur Anzeige eines Präsenzstatus auf einer Anzeigeeinheit eines Mobiltelefons**

(30) Priorität: 02.09.2002 DE 10241096
(71) Anmelder: Siemens Aktiengesellschaft, 80333 München (DE)
(72) Erfinder: Hauptvogel, Andreas, 12103 Berlin (DE); Lemke, Michael, 13156 Berlin (DE)

(57) **Zusammenfassung**

Die Erfindung betrifft ein Verfahren zur Anzeige eines Präsenzstatus eines Kommunikationsteilnehmers auf einer Anzeigeeinheit (A) eines Mobiltelefons (M), bei dem seitens des Mobiltelefons (M) den Präsenzstatus beschreibende Präsenzdaten (PD) empfangen werden, den Präsenzdaten (PD) Präsenzanzeigedaten (PAD) zugeordnet werden, welche von der Anzeigeeinheit (A) ausgebbar sind, bei einer Abfrage (AB) von in einem Telefonbuchspeicher (TS) des Mobiltelefons (M) gespeicherten Telefonbuchdaten (K5) gemeinsam mit den Telefonbuchdaten (K5) die Präsenzanzeigedaten (PAD) zu der Anzeigeeinheit (A) des Mobiltelefons (M) übertragen und dort angezeigt werden.

## Beschreibung

Die Erfindung betrifft ein Verfahren zur Anzeige eines Präsenzstatus eines Kommunikationsteilnehmers auf einer Anzeigeeinheit eines Mobiltelefons.

Aus der Druckschrift 3GPP TS 23.141 V0.0.0. "3^{rd}.Generation Partnership Project; Technical Specification Group Services and System Aspects; Presence Service; Architecture and Functional Description (Release 6)" vom Juni 2002 ist ein "Präsenz-Service" (Presence Service) genannter Dienst bekannt, bei dem mittels eines Präsenzrechners (Presence Server) Eigenschaften von ausgewählten Kommunikationsteilnehmern überwacht werden. Zu solchen Eigenschaften - die als Präsenzstatus bezeichnet werden - gehören beispielsweise die jeweils aktuelle Erreichbarkeit über Telefon, schriftliche Kurznachrichten (SMS) oder Email. Zur Angabe, über welche Kommunikationsteilnehmer ein bestimmter Nutzer Informationen über derartige Präsenzeigenschaften zu erhalten wünscht, sendet der jeweilige Nutzer eine Überwachungsliste (Watcher List) an den Präsenzrechner. Diese Überwachungsliste enthält eine Aufzählung der den Nutzer interessierenden zu überwachenden Personen bzw. deren Kommunikationsendgeräte.

Entsprechend des Inhalts dieser Überwachungsliste sendet der Präsenzrechner Präsenzdaten über die zu überwachenden Geräte oder Personen an ein Kommunikationsendgerät (z. B. Mobiltelefon) des Nutzers.

Der Erfindung liegt die Aufgabe zugrunde, ein Verfahren anzugeben, mit dem der Präsenzstatus auf einer Anzeigeeinheit des Mobiltelefons ausgegeben werden kann.

Diese Aufgabe wird erfindungsgemäß gelöst durch ein Verfahren zur Anzeige eines Präsenzstatus eines Kommunikationsteilnehmers auf einer Anzeigeeinheit eines Mobiltelefons, bei dem seitens des Mobiltelefons den Präsenzstatus beschreibende Präsenzdaten empfangen werden, den Präsenzdaten Präsenzanzeigedaten zugeordnet werden, welche von der Anzeigeeinheit ausgebbar sind, und bei einer Abfrage von in einem Telefonbuchspeicher des Mobiltelefons gespeicherten Telefonbuchdaten gemeinsam mit den Telefonbuchdaten auch die Präsenzanzeigedaten zu der Anzeigeeinheit des Mobiltelefons übertragen und dort bedarfsweise angezeigt werden. Dabei ist insbesondere vorteilhaft, dass die Präsenzanzeigedaten dann auf der Anzeigeeinheit des Mobiltelefons dargestellt werden, wenn eine Abfrage der Telefonbuchdaten stattgefunden hat, wenn also den Kommunikationsteilnehmer betreffende Informationen benötigt werden. Es werden also vorteilhafterweise die Präsenzanzeigedaten nicht isoliert für sich allein dargestellt, sondern im Zusammenhang mit anderen, im Telefonbuch des Mobiltelefons gespeicherten Daten über denselben (zu überwachenden) Kommunikationsteilnehmer.

Das erfindungsgemäße Verfahren kann so ausgestaltet sein, dass die Präsenzanzeigedaten gemeinsam mit den Telefonbuchdaten an der Anzeigeeinheit ausgegeben werden.

Eine Ausgestaltungsform des erfindungsgemäßen Verfahrens sieht vor, dass seitens des Mobiltelefons die Präsenzdaten von einem über ein Mobilfunknetz mit dem Mobiltelefon verbundenen Präsenzrechner empfangen werden.

Das erfindungsgemäße Verfahren kann so ablaufen, dass nach Empfang der Präsenzdaten aus einem Bilddatenspeicher des Mobiltelefons den Präsenzdaten zugeordnete Bilddaten ausgelesen werden, diese Bilddaten als Präsenzanzeigedaten zu der Anzeigeeinheit des Mobiltelefons übertragen werden, woraufhin an der Anzeigeeinheit der Präsenzstatus in Form eines Bildes ausgegeben wird. Die Anzeige des Präsenzstatus des zu überwachenden Objektes in Bildform ermöglicht es einem Verfahrensnutzer, die Präsenzinformationen sehr schnell, gewissermaßen "mit einem Blick", aufzunehmen. Weiterhin ist es möglich, auch eine größere Anzahl an Präsenzinformationen auf der (im allgemeinen kleinen) Anzeigefläche der Anzeigeeinheit des Mobiltelefons in einer übersichtlichen Art und Weise darzustellen. Darüberhinaus ermöglicht diese Art der Anzeige eine sprachenunabhängige und länderübergreifend verständliche Informationsdarstellung.

Das erfindungsgemäße Verfahren kann auch so ablaufen, dass nach Empfang der Präsenzdaten aus einem Textdatenspeicher des Mobiltelefons den Präsenzdaten zugeordnete Textdaten ausgelesen werden, diese Textdaten als Präsenzanzeigedaten zu der Anzeigeeinheit des Mobiltelefons übertragen werden, woraufhin an der Anzeigeeinheit der Präsenzstatus in Form einer alphanumerischen Zeichenkette ausgegeben wird. Diese Ausgestaltungsform des erfindungsgemäßen Verfahrens kann vorteilhafterweise auch mit solchen Mobiltelefonen genutzt werden, deren Anzeigeeinheiten lediglich zur Ausgabe alphanumerischer Zeichen geeignet sind. Dies kann beispielsweise bei Mobiltelefonen älterer Bauart der Fall sein. Darüber hinaus lassen sich mittels alphanumerischer Zeichen Zusatzinformationen an der Anzeigeeinheit ausgeben, welche beispielsweise die durch die Ausgabe des Bildes nach der obenbeschriebenen Ausführungsform übermittelten Informationen ergänzen.

Bei dem erfindungsgemäßen Verfahren kann als Telefonbuchspeicher eine mit dem Mobiltelefon verbundene SIM-Karte oder ein vorgewählter Bereich eines RAM-Speichers des Mobiltelefons verwendet werden.

Zur weiteren Erläuterung der Erfindung ist in
Figur 1 eine schematische Darstellung eines Ausführungsbeispiels eines mit einem Mobiltelefon verbundenen Mobilfunknetzes und in
Figur 2 ein detailliertes Ausführungsbeispiel des erfindungsgemäßen Verfahrens dargestellt.

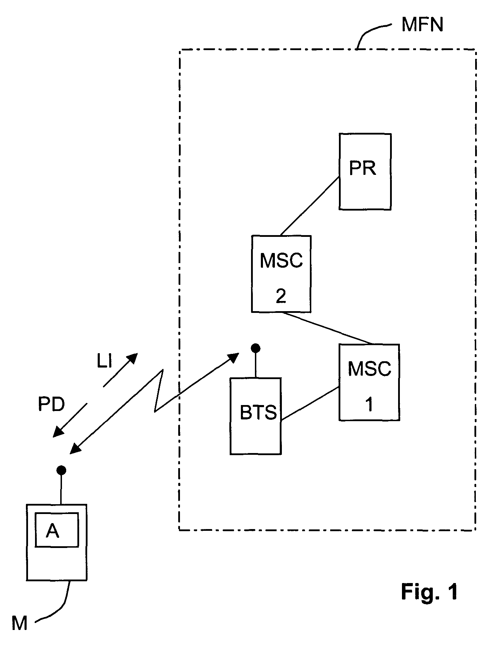

In Figur 1 ist schematisch ein Mobiltelefon M mit einer Anzeigeeinheit A dargestellt, welches über eine Luftschnittstelle mit einem Mobilfunknetz MFN verbunden ist. Die Luftschnittstelle verbindet das Mobiltelefon M mit einer Basisstation BTS (BTS = Base Transceiver Station), welche über eine erste Mobilvermittlungsstelle MSC1 (MSC = Mobile Services Switching Center) und eine zweite Mobilvermittlungsstelle MSC2 mit einem Präsenzrechner PR (PR = Presence Server) verbunden ist. Dabei kann sich der Präsenzrechner PR auch in einem weiteren Mobilfunknetz (in der Fig. 1 nicht dargestellt) befinden, wenn dieses weitere Mobilfunknetz mit dem in der Fig. 1 dargestellten Mobilfunknetz MFN verbunden ist.

Von dem Mobiltelefon M wird eine Überwachungsliste LI erstellt und über die Luftschnittstelle, die Basisstation BTS und die Mobilvermittlungsstellen MSC1 und MSC2 an den Präsenzrechner PR übertragen. Die Überwachungsliste enthält Informationen über diejenigen Kommunikationsteilnehmer (das sind z. B. die Kommunikationsgeräte von Mobilfunkteilnehmern, Festnetzteilnehmern und Internetteilnehmern), deren Präsenzstatus überwacht und mittels des Mobiltelefons angezeigt werden soll.

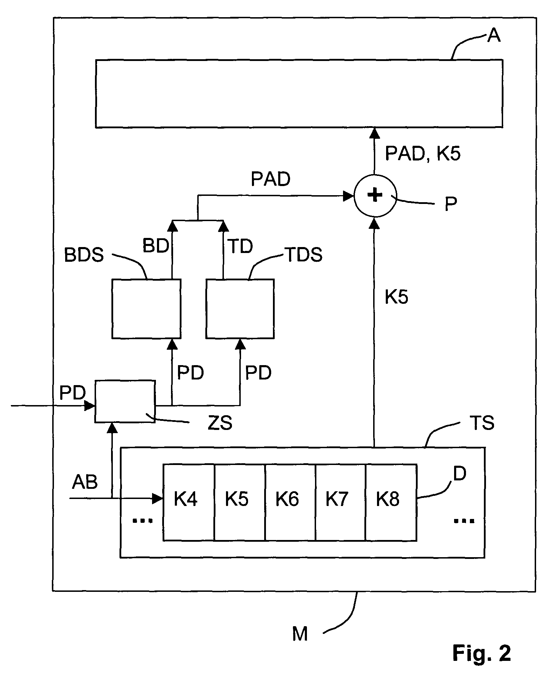

Entsprechend des Inhaltes dieser Überwachungsliste werden von dem Präsenzrechner PR Informationen über die zu überwachenden Teilnehmergeräte in Form von Präsenzdaten PD über die Mobilvermittlungsstellen MSC1 und MSC2 und die Basisstation BTS des Mobilfunknetzes MFN zu dem Mobiltelefon M übertragen. Das Verfahren zur Anzeige des Präsenzstatus dieser Geräte bzw. der Nutzer dieser Geräte auf der Anzeigeeinheit des Mobiltelefons wird detailliert mit Hilfe von Figur 2 beschrieben.

In Figur 2 sind die innerhalb des Mobiltelefons M ablaufenden Vorgänge zur Anzeige des Präsenzstatus auf der Anzeigeeinheit A des Mobiltelefons dargestellt. In einem ersten Schritt werden von dem Mobiltelefon M die den Präsenzstatus beschreibenden Präsenzdaten PD mittels einer nicht dargestellten Empfangseinrichtung empfangen und an einen Zwischenspeicher ZS weitergeleitet. Der Zwischenspeicher ZS speichert die Präsenzdaten bis zu ihrer weiteren Verwendung. Wenn aus einem vorhandenen Telefonbuchspeicher TS des Mobiltelefons M Telefonbuchdaten mittels eines Abfragesignals AB abgefragt werden, so wird dieses Abfragesignal AB auch zum Zwischenspeicher ZS geleitet. Derartige Telefonbuchspeicher TS in Mobiltelefonen werden gelegentlich auch als Adreßbuchspeicher bezeichnet; dies erfolgt insbesondere dann, wenn in ihnen neben dem Namen und der Telefonnummer des Kommunikationsteilnehmers auch weitere Angaben wie Adressen oder persönliche Notizen abgespeichert sind.

Von dem Zwischenspeicher ZS bzw. dessen Steuerungslogik wird festgestellt, ob für die Objekte (z. B. Faxgerät) oder Personen (z. B. Mobiltelefonteilnehmer), für die mittels des Abfragesignals AB Telefonbuchdaten aus dem Telefonbuchspeicher abgefragt wurden, in dem Zwischenspeicher Präsenzdaten vorhanden sind. Sind für diese Personen oder Objekte keine Präsenzdaten vorhanden, dann wird das Verfahren zur Anzeige des Präsenzstatus an dieser Stelle beendet und in dem Mobiltelefon läuft lediglich das dort vorgesehene Verfahren zur Anzeige der abgefragten Telefonbuchdaten ab. Sind aber in dem Zwischenspeicher ZS derartige Präsenzdaten vorhanden, so werden diese Präsenzdaten aus dem Zwischenspeicher ausgegeben und an einen Bilddatenspeicher BDS und einen Textdatenspeicher TDS weitergeleitet.

Aus dem Bilddatenspeicher BDS werden den Präsenzdaten zugeordnete Bilddaten BD ausgegeben. Diese Bilddaten BD enthalten beispielsweise Bildinformationen von kleinformatigen Bildern (Icons), welche in einer übersichtlichen Art und Weise den Informationsgehalt der Präsenzdaten darzustellen im Stande sind. Enthalten die Präsenzdaten beispielsweise die Information, dass ein zu überwachender Kommunikationspartner (der auch als Presentity bezeichnet wird) aktuell über sein Mobiltelefon erreichbar ist (weil er sein Mobiltelefon eingeschaltet hat und nicht bereits ein Mobiltelefonat führt), so kann diese Information durch ein Bild eines Mobiltelefons dargestellt werden. Enthalten die Präsenzdaten die Information, dass der interessierende Kommunikationsteilnehmer derzeit über ein Festnetztelefon erreichbar ist, so kann dies durch das Bild eines Telefonhörers präsentiert werden.

Nimmt der präsentierte Kommunikationsteilnehmer gerade mittels eines Kommunikationsendgerätes (Handy, Laptop, Palmtop, Computer mit Internetbrowser etc.) an einem Online-Spiel mit anderen Spielpartnern teil und kann man also durch Teilnahme an diesem Online-Spiel mit dem Kommunikationsteilnehmer in Verbindung treten, so kann diese Präsenzdaten-Information durch ein Bild mit einer für das entsprechende Spiel charakteristischen Abbildung dargestellt werden - beispielsweise durch ein Bild eines Schiffs für ein Strategiespiel, welches die Organisation eines Gütertransportes mittels Frachtschiffen behandelt. In analoger Weise kann die aktuelle Erreichbarkeit über Email durch die bildliche Darstellung eines Briefumschlages, ein aktueller Aufenthalt in London durch ein Bild der Tower Bridge oder die aktuelle Teilnahme an einer Tagung (bei der der zu überwachende Teilnehmer nicht gestört werden möchte) durch eine symbolhafte Darstellung einer Tagungsszene bildlich dargestellt werden. Die Bilddaten BD, die derartige Bilder beschreiben, werden als Präsenzanzeigedaten zu einem Summationspunkt P übertragen.

Parallel zu den vorgehend beschriebenen Vorgängen in dem Bilddatenspeicher BDS werden die von dem Zwischenspeicher ZS ausgegebenen Präsenzdaten PD auch an einen Textdatenspeicher TDS übertragen. Aus diesem Textdatenspeicher werden zu den Präsenzdaten korrespondierende Text-Zeichenketten (z. B. alphanumerische Textstrings) ausgelesen und als Textdaten TD ausgegeben. Auch diese Textdaten TD werden als Präsenzanzeigedaten zu dem Informationspunkt P übermittelt. Enthalten beispielsweise die Präsenzdaten PD die Information, dass der Presentity-Teilnehmer derzeit über sein Mobiltelefon in München erreichbar ist, so kann ein zu dieser Ortsinformation zugehöriger Textstring "München" (oder auch ein Textstring "Bayern", welcher nicht den Städtenamen des aktuellen Aufenthaltsortes, sondern lediglich das zugehörige Bundesland angibt) als Textdaten ausgegeben und als Präsenzanzeigedaten zu dem Summationspunkt P übertragen werden. Diese Textdaten können beispielsweise zur Ergänzung der aus dem Bilddatenspeicher BDS ausgelesenen Bilddaten (in diesem Fall zur Ergänzung des Bildes mit dem Mobiltelefon) dienen; später wird das Bild "Mobiltelefon" gemeinsam mit dem Textstring "München" auf der Anzeigeeinheit A des Mobiltelefons ausgegeben werden. Vorteilhafterweise können durch Benutzung der Textdaten TD auch solche detaillierten Informationen auf der Anzeigeeinheit angezeigt werden, deren Anzeige mittels eines Bildes nur schwer zu realisieren ist oder zu Missverständnissen führen kann.

Das Abfragesignal AB wird ebenfalls zu einem Telefonbuchspeicher TS des Mobiltelefons M übertragen. In diesem Telefonbuchspeicher TS sind Telefonbuchdaten D abgespeichert, von denen bei diesem Ausführungsbeispiel Telefonbuchdatensätze K4, K5, K6, K7 und K8 dargestellt sind. Beim dargestellten Ausführungsbeispiel werden mittels der Abfrage AB von den gespeicherten Telefonbuchdaten K4, K5, K6, K7 und K8 die Telefonbuchdaten K5 abgefragt; demzufolge werden die Telefonbuchdaten K5 von dem Telefonbuchspeicher TS ausgegeben und zu dem Summationspunkt P übertragen.

Der Summationspunkt P symbolisiert in der Darstellung der Figur 2 eine an sich bekannte Ansteuereinrichtung für die Anzeige A des Mobiltelefons. Diese Ansteuerschaltung P empfängt die jeweils aktuellen Telefonbuchdaten K5 und die Präsenzanzeigedaten PAD in Form der Bilddaten BD und der Textdaten TD. Die Präsenzanzeigedaten PAD und die Telefonbuchdaten K5 werden (ggf. nach einer Bearbeitung durch die Ansteuerschaltung P) zu der Anzeige A des Mobiltelefons übertragen und auf dieser ausgegeben. Dabei können die Präsenzanzeigedaten PAD und die Telefonbuchdaten K5 gemeinsam und gleichzeitig auf einer einzigen Sicht der Anzeige A dargestellt werden, was zu einer kompakten Informationsdarstellung führt. Es ist aber ebenso möglich, dass beispielsweise zuerst auf einer ersten Anzeigenausgabe der Anzeigeeinheit A die Telefonbuchdaten K5 dargestellt werden (evtl. gemeinsam mit einem Hinweis, dass Präsenzanzeigedaten vorliegen). Danach werden dann automatisch nach Ablauf einer voreingestellten Zeitspanne oder auf ein Eingabesignal (z.B. einen Tastendruck) hin auf einer zweiten Anzeigenausgabe der Anzeigeeinheit A die Präsenzanzeigedaten PAD dargestellt. Die Unterscheidung, ob die Präsenzanzeigedaten PAD und die Telefonbuchdaten K5 gemeinsam und gleichzeitig auf einer einzigen Sicht der Anzeige A oder nacheinander auf mehreren Sichten der Anzeigeeinheit A dargestellt werden, kann beispielsweise aufgrund kommunikationsteilnehmerspezifischer Voreinstellungen (die zusammen mit den Telefonbuchdaten in dem Telefonbuchspeicher des Mobiltelefons gespeichert sein können) erfolgen.

Es ist besonders vorteilhaft, dass die Präsenzanzeigedaten gerade zu dem Zeitpunkt auf der Anzeige A ausgegeben werden, wenn dort eine Ausgabe der Telefonbuchdaten K5 stattfindet. Dies ermöglicht es nämlich einem Benutzer des Mobiltelefons, gemeinsam mit den (im allgemeinen statischen d. h. zeitunveränderlichen) Informationen aus dem Telefonbuch des Mobiltelefons gleichzeitig die zeitlich veränderlichen Präsenzinformationen über das jeweils interessierende Kommunikationsendgerät oder den jeweils interessierenden Kommunikationsteilnehmer dargestellt zu bekommen. Diese Art der Anzeige ermöglicht es einem Mobiltelefonbenutzer, bei Abfrage von Daten eines Kommunikationsteilnehmers aus dem Telefonspeicher des Mobiltelefons beispielsweise zu erkennen, dass der zu überwachende Kommunikationsteilnehmer derzeit nicht über sein Mobiltelefon erreichbar ist (weil dieses beispielsweise ausgeschaltet ist oder die Funkabdeckung nicht ausreicht). Gleichzeitig erhält er die Information, dass dieser Teilnehmer aber per Email über seinen Laptop-Rechner erreichbar ist. Im Folgenden kann (z. B. automatisch) bei einem Kommunikationswunsch des Benutzers des Mobiltelefons von dem Mobiltelefon das derzeit geeignete Kommunikationsmedium ausgewählt werden und es findet keine unnötige Belastung des Mobilfunknetzes mit zu diesem Zeitpunkt ungeeigneten Kommunikationsversuchen statt.

Ein weiterer Vorteil für den Nutzer des Mobiltelefons besteht darin, dass dieser die Telefonbucheinträge K5 und die Präsenzinformationen gleichzeitig auf der Anzeige dargestellt bekommt, ohne dass dieser dazu mehrfach Bedienhandlungen vorzunehmen braucht. Damit ist das beschriebene Verfahren nicht nur besonders benutzerfreundlich, sondern vermeidet auch eine vorzeitige Abnutzung der Bedienelemente des Mobiltelefons (beispielsweise der Tasten) durch mehrfache Eingaben pro Anzeigewunsch.

## Patentansprüche

1. Verfahren zur Anzeige eines Präsenzstatus eines Kommunikationsteilnehmers auf einer Anzeigeeinheit (A) eines Mobiltelefons (M), bei dem
- seitens des Mobiltelefons (M) den Präsenzstatus beschreibende Präsenzdaten (PD) empfangen werden,
- den Präsenzdaten (PD) Präsenzanzeigedaten (PAD) zugeordnet werden, welche von der Anzeigeeinheit (A) ausgebbar sind, und
- bei einer Abfrage (AB) von in einem Telefonbuchspeicher (TS) des Mobiltelefons (M) gespeicherten Telefonbuchdaten (K5) mit den Telefonbuchdaten (K5) auch die Präsenzanzeigedaten (PAD) zu der Anzeigeeinheit (A) des Mobiltelefons (M) übertragen und dort angezeigt werden.

2. Verfahren nach Anspruch 1,
**dadurch gekennzeichnet, dass**
- die Präsenzanzeigedaten (PAD) gemeinsam mit den Telefonbuchdaten (K5) an der Anzeigeeinheit (A) ausgegeben werden.

3. Verfahren nach Anspruch 1 oder 2,
**dadurch gekennzeichnet, dass**
- seitens des Mobiltelefons (M) die Präsenzdaten (PD) von einem über ein Mobilfunknetz (MFN) mit dem Mobiltelefon (M) verbundenen Präsenzrechner (PR) empfangen werden.

4. Verfahren nach einem der vorhergehenden Ansprüche,
**dadurch gekennzeichnet, dass**
- nach Empfang der Präsenzdaten (PD) aus einem Bilddatenspeicher (BDS) des Mobiltelefons (M) den Präsenzdaten (PD) zugeordnete Bilddaten (BD) ausgelesen werden,
- diese Bilddaten (BD) als Präsenzanzeigedaten (PAD) zu der Anzeigeeinheit (A) des Mobiltelefons (M) übertragen werden,
- woraufhin an der Anzeigeeinheit (A) der Präsenzstatus in Form eines Bildes ausgegeben wird.

5. Verfahren nach einem der vorhergehenden Ansprüche,
**dadurch gekennzeichnet, dass**
- nach Empfang der Präsenzdaten (PD) aus einem Textdatenspeicher (TDS) des Mobiltelefons (M) den Präsenzdaten (PD) zugeordnete Textdaten (TD) ausgelesen werden,
- diese Textdaten (TD) als Präsenzanzeigedaten (PAD) zu der Anzeigeeinheit (A) des Mobiltelefons (M) übertragen werden,
- woraufhin an der Anzeigeeinheit (A) der Präsenzstatus in Form einer alphanumerischen Zeichenkette ausgegeben wird.

6. Verfahren nach einem der vorhergehenden Ansprüche,
**dadurch gekennzeichnet, dass**
- als Telefonbuchspeicher (TS) eine mit dem Mobiltelefon verbundene SIM-Karte verwendet wird.

7. Verfahren nach einem der vorhergehenden Ansprüche,
**dadurch gekennzeichnet, dass**
- als Telefonbuchspeicher (TS) ein vorgewählter Bereich eines RAM-Speichers des Mobiltelefons verwendet wird.
